# EUROPEAN PATENT SPECIFICATION

(11) **EP 1 765 947 B1**
(45) Date of publication and mention of the grant of the patent: **27.09.2017**
(21) Application number: 05711457.1
(22) Date of filing: 12.01.2005
(51) Int. Cl.: C09G 1/00, C08K 7/22

(54) **FLOOR FINISH WITH LIGHTENING AGENT**
BODENPFLEGEMITTEL MIT AUFHELLMITTEL
FINITION POUR SOL, CONTENANT UN AGENT ECLAIRCISSANT

(30) Priority: 28.05.2004 US 857593
(43) Date of publication of application: 28.03.2007
(73) Proprietor: ECOLAB INC., St. Paul, MN 55102-2233 (US); Rohm and Haas Company, Philadelphia, PA 19106-2399 (US)
(72) Inventor: LI, Minyu, Oakdale, MN 55128 (US); HEI, Robert, D., P., Baldwin, WI 54002 (US); CARLSON, Lauren, St. Paul, MN 55116 (US); GARDNER, Jamie, P., Stillwater, MN 55082 (US); MATTIA, Paul, J., Prior Lake, MN 55372 (US); TYSAK, Theodore, Ambler, PA 19002 (US); STEWART, Shiona, North Wales, PA 19454 (US); WILLIAMS, Elmer, Jr., Naperville, IL 60540 (US); SHAH, Nilesh, Maple Glen, PA 19002 (US)
(74) Representative: Godemeyer Blum Lenze Patentanwälte Partnerschaft mbB - werkpatent
(86) International application number: PCT/US2005/001208
(87) International publication number: WO 2005/118732

(56) References cited:
- EP-A- 0 565 244
- EP-A- 1 209 191
- WO-A-00/68304
- US-A- 5 147 940
- US-A- 6 043 319

## Description

### Technical Field

This invention relates to a floor coating method, a method for maintaining a floor and a jobsite-renewable floor finish kit.

### Background

Jobsite-renewable floor finishes provide chemically-strippable polymeric films that can be coated on the upper surface of flooring substrates (e.g., tiles, sheet vinyl goods, wood flooring and Terrazzo) to extend the substrate use life and to provide the substrate with a desirable glossy appearance, and later removed and replaced when the finish becomes worn or soiled. Patents involving floor finishes and mentioning pigments or colorants include U.S. Patent Nos. 4,680,237, 5,284,79, 5,851,618 and 6,472,027. Various black pigmented floor finishes have been marketed in the U.S., including ONYX™ black urethane modified acrylic sealer (from Perma, Inc.), BLACKJACK™ black plank floor finish (from JohnsonDiversey) and No. 402 glossy black floor finish (from Spartan Chemical Company, Inc.). A floor finish containing optical brightener is described in U.S. Patent No. 4,371,398. Various finishes containing optical brighteners have been marketed in the U.S., including ISHINE™ floor finish (25% nonvolatiles, from Spartan Chemical Co.) and BETCO BEST™ floor finish (32% nonvolatiles, from Betco Corp.). Floor finishes having an abrasive-containing surface finish, and said to be made using various abrasive particulates including titanium oxides such as titanium dioxide are described in U.S. Patent No. 5,445,670.

### Summary of the Invention

Most current floor finishes are formulated to be as clear as possible to avoid yellowing, to avoid hiding the underlying flooring and to permit multiple layers to be applied over time, or are heavily pigmented to provide adequate coverage using thin coats. Clear finishes sometimes have a yellow coloration or may be prone to yellowing when weathered. Ground-in or adsorbed dirt and debris can cause discoloration of clear and pigmented finishes, as can overly-aggressive use of chemical strippers. Sometimes due to wear, high traffic, environmental conditions or other factors it is difficult to maintain an adequate protective coat atop a flooring substrate. In such instances ground-in or adsorbed dirt and debris can permanently stain or discolor the flooring substrate. Considerable effort is expended in maintaining the appearance of floors and floor finishes, including frequent washing, buffing, and periodic renewal. "Wet look" finishes are sometimes thought to have an especially desirable appearance, and some clear finishes are formulated to attain high gloss levels.

As described in copending application WO2005/071030 (A2) entitled FLOOR FINISH WITH LIGHTENING AGENT, filed even date herewith, inclusion of an appropriate amount of a lightness-inducing agent in a transparent or translucent jobsite-renewable floor finish can impart to the floor a cleaner and more desirable perceived appearance. We have found that a yet further enhanced appearance may be obtained when the lightness-inducing agent includes a core-shell polymer system or sheathed polymer system having one visual form (e.g., clear or slightly opaque) when dissolved or suspended in the floor finish and another visual form (e.g., opaque, white or colored) when the floor finish is dried, crosslinked or otherwise hardened. The present invention thus provides a floor coating method applying to a flooring substrate a jobsite-renewable floor finish according to claim 1 to provide a translucent hardened finish layer having an increased lightness value.

In another aspect the invention provides a method for maintaining a floor according to claim 29.

The invention also provides a jobsite-renewable floor finish kit according to claim 30.

The disclosed floor finishes, methods and kits can provide a next-generation floor finishing system whose advantages may be visually appreciated.

### Detailed Description

By using words of orientation such as "atop", "beneath", "on", "under", "uppermost", "lowermost", "between" and the like for the location of various layers in the disclosed finishes, we refer to the relative position of one or more layers with respect to one another or where the context requires with respect to an underlying flooring substrate. We do not intend that the layers or flooring substrate must be horizontal, do not intend that the layers and flooring substrate must be contiguous or continuous, and do not exclude the presence of one or more intervening layers between layers or between the flooring substrate and a layer.

As used in connection with this disclosure, an "oligomer" is a polymerizable (e.g., crosslinkable) moiety containing a plurality (e.g., 2 to about 30) of monomer units.

As used in connection with this disclosure, a "film-former" is a monomer, oligomer or polymer that can be applied (if need be, with a suitable plasticizer or coalescing solvent) and dried, crosslinked or otherwise hardened to form a tack-free film.

As used in connection with this disclosure, a "hardening system" is a chemical or physical process (including solvent evaporation or other drying processes, photochemical reactions, electrochemical reactions, radical processes, ionic processes, moisture cure processes and multiple-component (e.g., two- or three-component) crosslinking processes) through which a composition becomes dried, crosslinked or otherwise cured to form a tack-free film.

As used in connection with this disclosure, "light" is electromagnetic radiation in the visible range, approximately 4 X 10⁻⁷ meters to 7.7 X 10⁻⁷ meters.

As used in connection with this disclosure, a floor finish is regarded as being "translucent" if when coated at a 50 m²/liter coating rate atop patterned vinyl composition floor tiles (e.g., EXCELON™ vinyl composition tiles from Armstrong World Industries, Inc. having a beige background and a mottled/speckled surface pattern identified as pattern no. 51839) and dried, cured or otherwise hardened, the pattern remains clearly discernible under normal daytime illumination to an observer standing on the floor.

As used in connection with this disclosure, a "lightness-inducing agent" is a material that imparts an increased lightness value L* to a hardened floor finish coated at a 50 m²/liter coating rate atop a black substrate when evaluated using the L*a*b color space in which a value of 0 is assigned to the light reflected from a perfectly black surface and 100 is assigned to the light reflected from a perfectly white surface.

As used in connection with this disclosure, a hardened floor finish is regarded as being "jobsite-renewable" if, at such time as it may be desired to do so, the finish can be removed from an underlying flooring substrate without removing substantial portions of the flooring substrate, using simple, minimally abrasive measures such as a methylene chloride-free or acetone-free chemical stripper and a mop and detergent solution, mildly abrasive but flooring-safe measures such as a nonwoven floor scrub pad, or other measures such as peeling (and without requiring aggressive removal techniques such as grinding, sanding, sandblasting or a stripper based on methylene chloride or acetone), and then replaced with the same or a substantially similar finish and hardened to provide a visibly smooth tack-free film.

As used in connection with this disclosure, a "multilayer floor finish" is a coating system that employs an undercoat and a topcoat of different compositions. In the interest of brevity, a layer or plurality of layers of the undercoat composition located between the flooring substrate and a topcoat may be referred to collectively as an "undercoat", a layer or plurality of layers of the topcoat composition located atop the flooring substrate and undercoat may be referred to collectively as the "topcoat", and a combination of a cured undercoat and topcoat (or a topcoat alone) located atop a flooring substrate may be referred to as a "coating" or "finish".

A variety of lightness-inducing agents may be used in the disclosed finishes. Exemplary materials include finely-divided particulates that may be obtained in dry form or as emulsions, suspensions, lattices or other liquid or semi-solid forms. Preferably such lightness-inducing agents have a submicron average particle diameter and will diffusely reflect light. The lightness-inducing agent may for example have a refractive index sufficiently different from that of the film former so that there will be greater diffuse or specular reflectance of incident light than that obtained in the absence of the lightness-inducing agent.

An especially useful class of lightness-inducing agents includes core-shell polymer systems and sheathed polymer systems, especially those that have one visual form (e.g., clear or slightly opaque) when dissolved or suspended in the film former and another visual form (e.g., opaque, white or colored) when the film former is dried, crosslinked or otherwise hardened. This may provide an especially visually pleasing or especially useful lightening effect, and may provide lightness-inducing agents having especially good resistance to sedimentation or other settling. Such lightness-inducing agents may for example serve as complete or partial replacements for more sedimentation-prone lightness-inducing agents. A variety of factors may be responsible for the above-described change in visual form. The lightness-inducing agent may for example contain or be capable of forming internal microvoids when the film former is hardened. Such microvoided lightness-inducing agents include sequentially emulsion polymerized dispersed particles of heteropolymers in which a polymeric acid "core" is at least partially encased in a polymeric "shell" or "sheath" that is permeable to a volatile base (e.g., ammonia or an organic amine) adapted to cause swelling of the core by neutralization. An aqueous dispersion of such particles may be especially useful in water-based coating compositions. Prior to coating application, an alkali (e.g., potassium hydroxide, ammonia or a lower organic amine) may be added to the particles or to a composition containing the particles, in order to at least partially neutralize the core (e.g., to a pH of about 6) and cause it to swell. When a coating composition containing the swollen particles is applied to a substrate and allowed or encouraged to dry, the cores may become unswollen and microvoids may form. A variety of core polymers may be employed in such lightness-inducing agents, including polymers of ethylenically unsaturated monomers containing acid functionality such as acrylic acid, methacrylic acid, (meth)acryloxypropionic acid, itaconic acid, aconitic acid, maleic acid or anhydride, fumaric acid, crotonic acid, monomethyl maleate, monomethyl fumarate and monomethyl itaconate. A variety of shell or sheath polymers may also be employed in such lightness-inducing agents, including polymers of unsaturated monomers such as styrene, o-chlorostyrene, 2,6-dichlorostyrene, alpha methyl styrene, divinyl benzene, vinyl naphthalene, pentachlorophenyl methacrylate or pentabromophenyl methacrylate. The core and shell or sheath may be formed in a single stage or in a plurality of stages. The amount of deposited polymer may be sufficient to provide heteropolymer particles having an average unswollen particle diameter (that is, a diameter before neutralization) of about 0.05 to about 5 micrometers, e.g., about 0.1 to about 3.5 micrometers or about 0.2 to about 2 micrometers. Amines that may be added to promote swelling include ammonia, monoethanolamines, diamines and other materials that can neutralize acidic groups in the polymer. The resulting heteropolymer particles may serve as lightness-inducing agents in the disclosed finishes and as a complete or partial replacement for more sedimentation-prone lightness-inducing agents such as titanium dioxide or zinc oxide. Further information regarding this class of lightness-inducing agents may be found in U.S. Patent Nos. 4,427,836 and 4,594,363.

Commercially available core-shell polymer systems or sheathed polymer systems that may be suitable to induce enhanced lightness properties in the disclosed finishes include HIQUE™ styrene acrylic polymer emulsion polymer microbeads such as HIQUE 821, HIQUE 168, and HIQUE 280S (all from Hankuck Lattices Co., Ltd.); ROPAQUE™ polymer emulsions such as ROPAQUE HP-91, ROPAQUE OP-62LO, ROPAQUE OP-96, ROPAQUE AF-1055, ROPAQUE OP-3000 and ROPAQUE ULTRA (all from Rohm and Haas Co.); and SUNSPHERES™ LCG styrene/acrylates copolymer (from Rohm and Haas Co.).

The above-mentioned core-shell polymer systems and sheathed polymer systems may be used by themselves or together with other lightness-inducing agents. One useful class of such other lightness-inducing agents includes materials designated as opaque or semi-opaque pigments by the National Association of Printing Ink Manufacturers in their NPIRI Raw Materials Data Handbook. Another useful class of such other lightness-inducing agents includes materials designated as food grade materials that are compatible as an indirect or direct food additive or substance, such as those described in the Code of Federal Regulations (CFR), Title 21 - Food and Drugs, parts 170 to 186. Yet another useful class of such other lightness-inducing agents includes organic materials such as functionally-modified (e.g., hydrophobically-modified) polymers, polymeric particles (e.g., polymeric nanoparticles), organic dye particles and hydrogels.

Pigments designated as "pigment whites" in the Society of Dyers and Colourists Colour Index ("C.I.") and suitable for use in the disclosed finishes include zinc oxide (Pigment White 4, C.I. 77947); lithopone (Pigment White 5, C.I. 77115), titanium dioxide (Pigment White 6, C.I. 77891); zinc sulfide (Pigment White 7, C.I. 77975); antimony oxide (Pigment White 11, C.I. 77052), zirconium oxide (Pigment White 12, C.I. 77990); barium sulfate (Pigment White 21, C.I. 77120); coprecipitated 3BaSO₄/Al(OH)₃ (Pigment White 23, C.I. 77122) and bismuth oxychloride (C.I. 77163). Other inorganic pigments that may be suitable to induce enhanced lightness properties in the disclosed finishes include boron nitride; mixed titanium, chrome and antimony oxides (Pigment Brown 24, C.I. 77310); zinc sulfide (Pigment Yellow 35, C.I. 77205); mixed titanium, nickel and antimony oxides (Pigment Yellow 53, C.I. 77788); mixed titanium, nickel and niobium oxides (Pigment Yellow 161, C.I. 77895); and bismuth vanadate/bismuth molybdate (Pigment Yellow 184, C. I. 771740). Commercially available titanium dioxide pigments include TI-PURE™ pigments from E. I. duPont de Nemours and Co. such as TI-PURE R-746 aqueous pigment dispersion and TI-PURE R-960 pigment; KEMIRA™ pigments and UV-TITAN™ pigments from Kemira Pigments Oy such as KEMIRA 660 alumina-silica-polyol surface treated rutile titanium dioxide, KEMIRA RDI-S alumina surface treated rutile titanium dioxide, KEMIRA RD3 alumina-zirconia surface treated rutile titanium dioxide and KEMIRA RDE2 and KEMIRA RDDI alumina-silica surface treated rutile titanium dioxide; TRONOX™ chloride process and TRONOX sulfate process titanium dioxide pigments from Kerr-McGee Corp.; and titanium dioxide pigments from Sun Chemical Corp. Commercially available zinc oxides include zinc oxide powders from U.S. Zinc. (available in a variety of surface areas), and "ultrafine zinc oxides" (zinc oxide having an average particle diameter or average crystallite size less than the shortest wavelength of visible light) such as NANOGARD™ zinc oxide, NANOPHASE™ zinc oxide and NANOTEK™ zinc oxide from Nanophase Technologies Corp.; NANOZINC OXIDE™ from Greencorp Magnetics Pty. Ltd.; UCD-1106E titanium dioxide From Rohm and Haas Co.; ZnO-310 and ZnO-350 ultrafine zinc oxide from Sumitomo-Osaka Cement Co. and ZINOX™ 350 ultrafine zinc oxide from American Chemet Corp.

Another useful class of lightness-inducing agents that may be used in the disclosed finishes with the disclosed core-shell polymer systems and sheathed polymer systems include ACUSOL™ opacifiers (believed to be water-based styrene/acrylic emulsions) such as ACUSOL OP301, OP302P, OP303P, OP304 and OP305 (all from Rohm and Haas Co.); ammonium nonoxynol-4 sulfate (believed to be available in a blend with diethanolamine/styrene/acrylates/divinylbenzene copolymer); hollow sphere plastic pigments such as HS 3000NA, HS3020NA and HSB 3042NA hollow sphere plastic pigment (all from Dow Chemicals, Inc.); polyacrylate block copolymers with alternating hydrophilic and hydrophobic blocks such as HYPAN™ hydrogels including SA-100H and SR-150H acrylic acid/acrylonitrogens copolymer, SS-201 ammonium acrylates/acrylonitrogens copolymer and QT-100 polyquaternium-31 copolymer (all from Lipo Chemicals, Inc.); KESSCO™ opacifiers such as KESSCO GMS PURE glyceryl stearate, KESSCO DGMS and KESSCO DGS NEUTRAL PEG-2 stearate, KESSCO DGDS PEG-2 distearate, KESSCO PGMS PURE propylene glycol stearate and KESSCO PEG 200-6000 mono- and di-laurates, oleates and stearates (all from Stepan Chemical Co.); LIPONYL™ polyamide powders such as LIPONYL 20 LL and 10 BN 6058 (both from Lipo Chemicals, Inc.); LIPOLIGHT™ OAP/C polydodecanamideaminium triazadiphenylethenesulfonate/polyvinyl alcohol crosspolymer (from Lipo Chemicals, Inc.); Lipo PE BASE G-55 glycerin and
diglycol/cyclohexanedimethanol/isophthalates/sulfonated isophthalates copolymer (from Lipo Chemicals, Inc.); ORGASOL™ polyamide powders such as ORGASOL 2002 D Nat Cos, 2002 EX D Nat Cos, 2002 UD Nat Cos, 4000 EX D Nat Cos, 1002 EX D Blanc 10 Cos, 1002 D Nat Cos and 2002 EX D Nat Cos (all from Lipo Chemicals, Inc.); and PARALOID™ impact modifiers such as PARALOID KM-342, PARALOID KM-342B and PARALOID KM-334 (all from Rohm and Haas Co.).

Waterborne solutions or dispersions of lightness-inducing agents are preferred for use with waterborne floor finish formulations, with acrylic dispersions being especially preferred for use in acrylic floor finish formulations. Mixtures of lightness-inducing agents may also be employed.

A variety of film formers can be employed in the disclosed finishes, including solvent-borne, waterborne or 100% solids compositions containing monomers, oligomers or polymers and employing a variety of hardening systems. Exemplary film formers include water-soluble or water dispersible (as is or with a dispersing agent) acid-containing polymers crosslinkable using transition metals, alkaline earth metals, alkali metals or mixtures thereof (e.g., zinc crosslinked acrylics); metal-free (e.g., zinc-free) acrylic finishes (e.g., acrylic copolymers); polyurethanes (e.g., radiation-curable polyurethanes, polyurethane dispersions, multipart polyurethanes and latent one part polyurethane compositions containing a blocked isocyanate); acrylic urethanes; water-based (e.g., waterborne) latex emulsions; aziridine-crosslinkable dispersions; compositions crosslinked with carbodiimides; wax emulsions; polyvinyl acetate copolymers (e.g., polyvinyl acetate-polyethylene copolymers); polyvinyl alcohol and its copolymers; polyvinylpyrrolidone and its copolymers; modified cellulose; sulfonated polystyrenes and a variety of other materials that will be familiar to those skilled in the art. Representative commercially available film formers include DURAPLUS™ 2 modified acrylic low odor mixed-metal crosslinked polymer, DURAPLUS 3 zinc crosslinked acrylic dispersion, PRIMAL™ B-336AFK modified acrylic zinc crosslinked polymer, PRIMAL B-924ER zinc crosslinked, all acrylic polymer emulsion, PRIMAL E-2483 metal crosslinked acrylic polymer, PRIMAL E-3188 waterborne acrylic polymer dispersion, PRIMAL NT-2624 metal-free polymer, PRIMAL NT-6035 metal-free polymer, RHOPLEX™ B-924 all-acrylic metal-crosslinked floor polish polymer, RHOPLEX 1421 zinc crosslinked acrylic dispersion, RHOPLEX B-1604 metal-crosslinked modified acrylic polymer, RHOPLEX NT-2624 metal crosslinker-free modified acrylic polish, RHOPLEX 3479 low foaming metal-crosslinked modified acrylic polymer, ROSHIELD™ 3120 UV curable acrylate coating and UHS PLUS™ metal-crosslinked modified acrylic polymer, all from Rohm & Haas Co.; MEGATRAN™ 205 zinc crosslinked acrylic dispersion and SYNTRAN™ 1580 zinc crosslinked acrylic dispersion from Interpolymer Corp.; MORGLO™ 2 zinc crosslinked acrylic dispersion from Omnova Solutions Inc.; LAROMER™ PE 22 WN polyester acrylate emulsion, LAROMER™ LR 8949 aqueous radiation curable aliphatic polyurethane dispersion and LAROMER™ LR 8983 aqueous radiation curable aromatic polyurethane dispersion, all from BASF Corp.; the ZVOC™ series of UV curable coatings from UV Coatings Limited; NEORAD™ NR-3709 UV curable aliphatic urethane coating from Zeneca Resins; VIAKTIN™ VTE 6155 aliphatic urethane acrylate, VTE 6165 aromatic urethane acrylate and VTE 6169 aliphatic polyester urethane radiation curing resins, all from Solutia, Inc.; 98-283W urethane acrylate from Hans Rahn & Co.; and materials such as those described in U.S. Patent Nos. 4,517,330, 4,999,216, 5,091,211, 5,319,018, 5,453,451, 5,773,487, 5,830,937, 6,096,383, 6,197,844, 6,228,433. 6,316,535 B1, 6,544,942 B1, U.S. Patent Application Publication No. US 2002/0028621 A1, and in the patents cited therein. Especially preferred film formers include water-soluble or water-dispersible film formers such as metal-free acrylic finishes, acid-containing polymers crosslinked using transition metals, and water-soluble or water-dispersible multicomponent (e.g., two component) polyurethanes. Mixtures of film formers can also be employed.

Often it will be convenient to prepare the finish by adding the lightness-inducing agent to a commercially available floor finish material such as FRONT COURT™, GEMSTAR LASER™, GEMSTAR POLARIS™, ORION™ base coat, PADLOCK™, RIVET™ and TAJ MAHAL™ acrylic floor finishes, COURTMASTER II™ urethane floor finish and ISI STAR™ and TUKLAR MEDICAL™ floor finishes from Ecolab Inc.; CORNERSTONE™ and TOPLINE™ acrylic floor finishes from 3M; BETCO BEST™ floor finish from Betco Corp.; HIGH NOON™ acrylic finish from Butchers; CITATION™ and CASTLEGUARD™ acrylic finishes from Buckeye International, Inc., COMPLETE™, SIGNATURE™, TECHNIQUE™ and VECTRA™ acrylic floor finishes from SC Johnson Professional Products; OVER AND UNDER™ floor sealer from S. C. Johnson Professional Products; SPLENDOR™, DECADE 90™, PRIME SHINE™ ULTRA and PREMIER™ acrylic finishes and FIRST ROUND and FORTRESS™ urethane acrylic finishes from Minuteman, International, Inc.; ACRYL-KOTE™ Seal and Finish and PREP Floor Seal from Minuteman, International, Inc.; ULTRA TC™ and UV I-FINISH™ UV-curable finishes from Minuteman, International, Inc; FLOORSTAR™ Premium 25 floor finish from ServiceMaster, Inc.; and UPPER LIMITS™ acrylic finish and ISHINE™ optically brightened floor finish from Spartan Chemical Co. Other suitable formulations that can be combined with the lightness-inducing agent include No. AD200C1 polyester polyurethane formulation from Air Products and Chemicals, Inc.; No. MG98-040 polyester polyurethane formulation from Bayer AG; STAY-CLAD™ 5900 hydroxyl-functional acrylic polymer dispersion from Reichhold, Inc.; Nos. 979-1 and 980-3 polyester polyurethane formulations from U.S. Polymers, Inc.; and No. G-2029 acrylic polyurethane formulation from Zeneca Resins.

Sufficient lightness-inducing agent should be employed in the finish to impart to the finish a noticeable increase in lightness without making the finish non-translucent. Lightness can be measured using a spectrophotometer that provides color values in the L*A*B color space (or values that can be converted thereto) from suppliers including Byk-Gardner, Color-Tec Associates, Inc., Konica Minolta, Hunter Associates Laboratory, X-Rite Inc. and others that will be familiar to those skilled in the art of color measurement. Lightness can also be assessed using the human eye, which typically is most sensitive to changes in hue and very sensitive to changes in chroma (saturation), but also is fairly sensitive to changes in lightness. As the lightness-inducing agent level initially increases, the lightness value may also increase and the floor may have a cleaner yet perceptibly natural appearance. However, as the lightness-inducing agent level increases, the coating translucency (and transmittance) may also be reduced. The less translucent the coating, the more the underlying tile surface or underlying pattern will be masked or obliterated. At high lightness-inducing agent loading levels the floor may take on an unnaturally white or even painted appearance. By balancing the lightness-inducing agent loading level to attain an appropriate lightening effect and appropriate translucency, a cleaner-appearing yet discernible coated floor may be attained. The resulting "clean look" floor may have a more desirable appearance from a user's perspective and may require less cleaning or less regular maintenance from a custodial perspective. As a general numeric guide, the lightness value is greater than that of the unmodified finish and may preferably be less than about 60 and may more preferably be less than about 55.

The desired amount of lightness-inducing agent may also depend on the chosen agent's Hiding Power (measured as described below in the section entitled Hiding Power), with lower addition levels of the disclosed core-shell polymer systems and sheathed polymer systems being preferred when high Hiding Power lightness-inducing agents such as titanium dioxide are also included in the floor finish. As a further general numeric guide, the amount of lightness-inducing agent that may be added to a film former is from about 1 to about 75 wt. % based on a comparison of the lightness-inducing agent solids weight to the total floor finish solids. Depending on the chosen lightness-inducing agent and film former, other ranges may be useful, e.g., about 1 to about 60 wt. %, about 1 to about 50 wt. %, about 1 to about 30 wt. %, about 1 to about 20 wt. % or about 2 to about 10 wt. %.

A ratio calculated by dividing the Hunter Whiteness Index (a value provided when measuring color values using a Hunter Labs color spectrophotometer) by the 500 nm absorbance coefficient also may provide a useful measure of appearance merit. As the lightness-inducing agent loading initially increases, the ratio will decrease. As a general numeric guide, coatings whose Whiteness Index:absorbance coefficient ratio remains above about 40, and more preferably above about 80 may be preferred, whereas a finish having a ratio of about 30 may appear overly white with undesirable masking or hiding of the underlying tile pattern.

A further ratio calculated by dividing the lightness value L* by the Hiding Power also may provide a useful measure of appearance merit. As the lightness-inducing agent loading initially increases, the ratio will increase. As a general numeric guide, coatings whose L:Hiding Power ratio remains above about 30, and more preferably above about 35 may be preferred.

If added to a topcoat, the lightness-inducing agents preferably are added at levels that do not objectionably reduce the coating 20° gloss level as hardened (or if need be, as buffed or burnished). The degree of gloss reduction that may be objectionable will vary depending on the particular application. As a general numeric guide, gloss level reductions less than 25 absolute points (on a 100 point scale), and more preferably less than 10 points are preferred. If added to an undercoat (or to a buried overlying layer that will be overcoated with a layer containing none or a lower level of lightness-inducing agents, e.g., a gloss topcoat) then usually a greater degree of gloss reduction can be tolerated as it may be compensated for by application of the overlying layer or topcoat. Even if not coated with a higher gloss layer, the overall appearance improvement provided by the enhanced lightness level can sometimes offset a substantial degree of gloss reduction, yielding a finish that will be perceived as having a better appearance despite a considerably reduced gloss level.

Preferably the lightness-inducing agent(s) and film former(s) are combined using stirring, sonification or other mixing methods that will be apparent to those skilled in the art. Mixing may be done well prior to use, e.g., when the finish is manufactured and packaged, or at a later time, e.g., when the finish is used at a job site. Dispersing agents, rheology modifiers, suspending agents, chelating agents, lightness inducing-agent surface treatments and other measures (collectively referred to as "anti-settling agents") may be employed to assist in mixing the lightness-inducing agent and film former, and to prevent or discourage settling or sedimentation during storage. The particle size of the lightness-inducing agent may also be taken into account, since more finely divided lightness-inducing agents typically are more resistant to settling. A wide variety of anti-settling agents may be employed. Representative anti-settling agents are described in D. B. Brown and M. R. Rosen, The Rheology Modifier Handbook (ChemTec, 1999). Anti-settling agents that may be useful in the disclosed finishes include fumed silicas; starch and modified starches; hydroxyethylcellulose (HEC) and functionalized copolymers such as alkali swellable emulsions (ASE), hydrophobically modified alkali swellable emulsions (HASE) and hydrophobically modified ethoxylated urethane resins (HUER). Commercially available anti-settling agents that may be useful in the disclosed finishes include the DREWTHIX™ series of rheology modifiers from Ashland Specialty Chemical Co.; the ANTISETTLE™ CVP, CRAYVALLAC™ series and FLOWTONE GST rheology modifiers from Atofina; the CAB-O-SIL™ series of fumed silicas from Cabot Corp.; the DISPEX™ series of dispersing agents and the VISCALEX™ and RHEOVIS™ series of rheology modifiers from Ciba Specialty Chemicals; the AEROSIL™ series of fumed silicas from Degussa; the UCAR™ POLYPHOBE™ series of alkali-swellable urethane-modified rheology modifiers from Dow Chemical Company; the AQUAFLOW™ series of nonionic and anionic associative polymers from Hercules Inc.; the NEOSIL™ series of fumed silicas from Ineos Silicas; the TAMOL™ series of polyacid and hydrophilic copolymer dispersants from Rohm & Haas Co.; the STRUCTURE™ series of modified starches from National Starch & Chemical; the CARBOPOL™ series of homopolymers and copolymers from Noveon and the ACRYSOL™, ACUSOL™ and ASE™ series of rheology modifiers from Rohm & Haas Co. It may be desirable for the disclosed finishes to have relatively low viscosity at the time of application, e.g., less than about 50 - 100 cP or even less than about 10 cP, as measured using a BROOKFIELD™ LV Series viscometer and (if needed) an Ultra Low Adapter accessory. The disclosed finishes may benefit from stirring prior to use, especially if some settling or sedimentation of the lightness-inducing agent has taken place during storage. When such settling or sedimentation has occurred, the lightness-inducing agent desirably redisperses with moderate stirring or other agitation and remains well-distributed throughout the stirred finish for a time period sufficient to enable application of the finish, e.g., for one or more, or even for three or more hours following agitation.

The floor finish may also contain water or another suitable diluent, plasticizer or coalescent, including compounds such as benzyloxyethanol; an ether or hydroxyether such as ethylene glycol phenyl ether (available as "DOWANOL EPh" from Dow Chemical Co.) or propylene glycol phenyl ether (available as "DOWANOL PPh" from Dow Chemical Co.); dibasic esters such as dimethyl adipate, dimethyl succinate, dimethyl glutarate, dimethyl malonate, diethyl adipate, diethyl succinate, diethyl glutarate, dibutyl succinate, and dibutyl glutarate (including products available under the trade designations DBE, DBE-3, DBE-4, DBE-5, DBE-6, DBE-9, DBE-IB, and DBE-ME from DuPont Nylon); dialkyl carbonates such as dimethyl carbonate, diethyl carbonate, dipropyl carbonate, diisopropyl carbonate, and dibutyl carbonate; phthalate esters such as dibutyl phthalate, diethylhexyl phthalate, and diethyl phthalate; and mixtures thereof. Cosolvents can also be added if desired to assist in formulating and applying the finish. Suitable cosolvents include Butoxyethyl PROPASOL™, Butyl CARBITOL™ acetate, Butyl CARBITOL™, Butyl CELLOSOLVE™ acetate, Butyl CELLOSOLVE™, Butyl DIPROPASOL™, Butyl PROPASOL™, CARBITOL™ PM-600, CARBITOL™ Low Gravity, CELLOSOLVE™ acetate, CELLOSOLVE™, Ester EEP™, FILMER IBT™, Hexyl CARBITOL™, Hexyl CELLOSOLVE™, Methyl CARBITOL™, Methyl CELLOSOLVE™ acetate, Methyl CELLOSOLVE™, Methyl DIPROPASOL™, Methyl PROPASOL™ acetate, Methyl PROPASOL™, Propyl CARBITOL™, Propyl CELLOSOLVE™, Propyl DIPROPASOL™ and Propyl PROPASOL™, all of which are available from Union Carbide Corp.; and mixtures thereof. The concentration may vary depending in part on the other finish ingredients and on the intended application and application conditions. As a general guide, when water alone is used as a diluent, the water concentration preferably is from about 15 to about 98 wt. % based on the finish formulation weight. The finish may contain other water amounts, e.g., about 25 to about 95 wt. % water, about 60 to about 95 wt. % water or about 80 to about 89 wt. % water. If a diluent, plasticizer, coalescent or cosolvent other than water is included in the finish formulation, then the diluent, plasticizer, coalescent or cosolvent concentration preferably is from about 0.1 to about 10 wt. % based on the weight of polymerizable solids in the finish, and more preferably about 1 to about 7 wt. %.

The floor finish may contain one or more initiators, catalysts or crosslinkers capable of hardening the film former. For example, depending in part on the chosen film former, the floor finish may contain transition metal compounds such as zinc or zirconium compounds; tin compounds such as dibutyl tin dilaurate, stannous octoate and FASCAT™ 4224 dibutyltin bis(1-thioglycerol) catalyst (available from ATOFINA Chemicals, Inc.); amines; other zinc compounds such as zinc crosslinked acrylic dispersions (described further in application Serial No. 10/755,972 entitled AQUEOUS POLYURETHANE COATING SYSTEM CONTAINING ZINC CROSSLINKED ACRYLIC DISPERSION, filed January 12, 2004, ultrafine zinc oxide (described further in application Serial No. 10/755,975 entitled POLYURETHANE COATING CURE ENHANCEMENT USING ULTRAFINE ZINC OXIDE, filed January 12, 2004, zinc carbonates including zinc tetraamine carbonate and zinc ammonium carbonate (described further in application Serial No. 10/755,976 entitled POLYURETHANE COATING CURE ENHANCEMENT USING ZINC CARBONATE INITIATORS, filed January 12, 2004; and a variety of other materials that will be familiar to those skilled in the art.

The floor finish may also contain inorganic or organic particles (or both inorganic and organic particles) to enhance its abrasion resistance, scratch resistance, wear resistance or strippability. Preferred inorganic particles are described in copending U.S. Patent Application Serial No. 09/657,420 filed September 8, 2000 and entitled SCRATCH-RESISTANT STRIPPABLE FINISH. It should be noted that the inorganic particles in the UV-curable finishes exemplified in the latter reference did not diffusely reflect light.

The floor finish can contain a variety of other adjuvants to alter its performance or properties before or after application to a floor. Useful adjuvants include flatting agents, surfactants, surface slip modifiers, defoamers, waxes, indicators, UV absorbers, light stabilizers, antioxidants, plasticizers, coalescents and adhesion promoters. The types and amounts of such adjuvants will be apparent to those skilled in the art. The finish may if desired be formulated to match the characteristics of current floor finish compositions with respect to properties such as gloss, odor, viscosity, resistance to foaming, compatibility with packaging materials, adhesion to substrates and to other finish layers, resistance to freeze/thaw cycles, freedom from hazardous air pollutants (HAPs) or other undesirable ingredients and other properties that will be apparent to those skilled in the art.

The lightness-inducing agents can be employed in one or more layers of multilayer floor finish compositions. Representative multilayer floor finish compositions are described in application Serial No. 09/560,170 entitled STRIPPABLE LAMINATE FINISH filed April 28, 2000; application Serial No. 09/838,884 entitled STRIPPABLE LAMINATE FINISH filed April 20, 2001; application Serial No. 10/756,119 entitled JOBSITE-RENEWABLE MULTILAYER FLOOR FINISH WITH ENHANCED HARDENING RATE, filed January 12, 2004; and in published PCT Application No. WO 98/11168 (Hamrock et al.).

The disclosed floor finishes can be applied to a variety of substrates, including wood, plastics, metals, concrete, wallboard and other mechanical or architectural substrates. The disclosed finishes are particularly well-suited for application to flooring substrates due to their clean appearance. Representative flooring substrates include resilient substrates such as sheet goods (e.g., vinyl flooring, linoleum or rubber sheeting), vinyl composite tiles, rubber tiles, cork and synthetic sports floors, and non-resilient substrates such as concrete, stone, marble, wood, ceramic tile, grout, Terrazzo and other poured or "dry shake" floors. The coating can be jobsite-applied to a flooring substrate after the substrate has been installed (e.g., to monolithic flooring substrates such as sheet vinyl goods, linoleum, cork, rubber sheeting, synthetic sports floors, concrete, stone, marble, grout or Terrazzo, or to multipiece flooring substrates such as vinyl composite tiles, wood floorboards or ceramic tiles), or can be factory-applied to a flooring substrate before it is installed (e.g., to monolithic flooring substrates such as sheet vinyl goods in roll form, or multipiece flooring substrates such as vinyl composite tiles or wood floorboards). Jobsite application is especially preferred, with suitable jobsites including indoor and outdoor sites involving new or existing residential, commercial and government- or agency-owned facilities.

The disclosed finishes can be applied using a variety of methods, including spraying, brushing, flat or string mopping, roll coating and flood coating. Mop (e.g., string or flat mop) or roller application is preferred for coating most floors. Suitable mops include those described in U.S. Patent Nos. 5,315,734, 5,390,390, 5,680,667 and 5,887,311. Typically, the floor should first be cleaned and any loose debris removed. One or more undercoat layers or coats (diluted if necessary with water or another suitable diluent, plasticizer, coalescent or cosolvent) may be applied to the floor. One to three undercoat layers typically will be preferred. When multiple undercoat layers are employed they can be the same or different. Each undercoat layer preferably will have a dry coating thickness of about 2.5 to about 25 µm, more preferably about 2.5 to about 15 µm. Preferably the overall undercoat dry coating thickness will be about 5 to about 100 µm, and more preferably about 5 to about 50 µm.

One or more (e.g., one to three) topcoat layers may be applied to the floor or to the undercoat. Each topcoat layer preferably will have a dry coating thickness of about 2.5 to about 200 µm, more preferably about 5 to about 100 µm. Preferably the overall topcoat dry coating thickness will be relatively thin in order to reduce raw material costs, e.g., about 2.5 to about 400 µm, and more preferably about 2.5 to about 100 µm. Multilayer finishes preferably will have an overall dry coating thickness of about 10 to about 500 µm, and more preferably about 10 to about 80 µm. The floor can be placed into service (or returned to service) once the finish has hardened sufficiently to support normal traffic without marring.

The finish can receive normal maintenance until such time as it is desired to remove and renew it. Removal can be carried out, for example, by cleaning the floor (using e.g., a brush or mop) followed by application of a stripper. The chosen stripper may include compositions containing phenyl alcohols (e.g., benzyl alcohol); alkoxy ethers (e.g., glycol ethers such as propylene glycol methyl ether and ETHYL CARBITOL™, BUTYL CARBITOL™ and BUTYL CELLOSOLVE™ solvents from Union Carbide Corp.); alkoxy esters; aryloxy alcohols (e.g., phenoxy ethanol and phenoxy propanol); dibasic esters; N-alkyl pyrrolidones, ketones, esters, metasilicates; amines (e.g., ethanolamine); alkanolamines (e.g., monoethanolamine); acid based agents and caustic agents (e.g., sodium or potassium hydroxide). Available strippers include AIR STRIP™, CARESTRIP™ LO, HAWK™ and LIBERTY (all available from Ecolab Inc.); ARRIVA™, JUGGERNAUT™, LIQUID SHOVEL™, REVELATION™ and S.W.A.T. NA™ strippers from Buckeye International; and ATTACK™, BRAVO™, FREEDOM™, LINOSAFE™ and PRO STRIP™ strippers from JohnsonDiversey. Strippers containing phenyl alcohols are especially preferred for stripping multilayer finishes employing polyurethane topcoats owing to the relatively high rate at which phenyl alcohols may penetrate such topcoats and their ease of use and low odor. A particularly preferred stripper concentrate contains a polar solvent that is denser than water and a sufficiently low level of cosolvent or surfactant so that upon mixing with water a pseudo-stable aqueous dispersion forms which will phase-separate following application to a surface. Concentrates of this type are described in U.S. Patent No. 6,544,942. Another preferred stripper concentrate contains about 1 to 75 wt. percent of an ether alcohol solvent having a solubility in water of less than about 5 wt. % of the solvent, and about 1 to 75 wt. % of an ether alcohol solvent/coupler having a solubility in water of about 20 to about 100 wt. % of the solvent/coupler, wherein the vapor pressure of the concentrate is less than 1 millimeter Hg. Concentrates of this type are described in U.S. Patent No. 6,583,101. The stripper can contain a variety of adjuvants to alter the performance or properties of the stripper before or after application to a cured polyurethane finish. Useful adjuvants include abrasive particles, surfactants, defoamers, indicators, slip reducing agents, colorants and disinfectants. The types and amounts of such adjuvants will be apparent to those skilled in the art.

The stripper should be allowed to stand for a suitable time (e.g., for a minute or more, preferably for two hours or less, and most preferably for between about 5 minutes and about 1 hour) while it softens the finish. After the finish softens sufficiently it can be removed using a variety of techniques including scrubbing, vacuuming, mopping, use of a squeegee, scraping, sweeping, wiping, mild abrasion or other measures that do not remove substantial portions of the floor. Removal will usually be made easier if water or a suitable detergent solution is applied to the softened finish. The floor can be allowed to dry and new layers of the undercoat and polyurethane applied to renew the finish.

Multilayer finishes typically will be sold in the form of a kit including the undercoat and topcoat in suitable containers or dispensers together with suitable instructions for mixing or dispensing any undercoat and topcoat components as needed and for applying the undercoat atop a floor and applying the topcoat atop the undercoat. If desired, the undercoat or topcoat could be packaged as concentrates intended to be mixed with water or another suitable solvent prior to application. The lightness-inducing agent may be included in an undercoat or topcoat component or packaged separately and mixed with the topcoat or undercoat shortly before application to a floor. Optionally the kit may include a stripper concentrate in a suitable container. The stripper concentrate typically will be mixed with water or another suitable carrier at, for example, about 5 - 30 % by weight active ingredients prior to application. The kit can also contain additional undercoat materials (e.g., leveling coatings) that can be applied to the floor before application of the undercoat and topcoat, or various additional materials (e.g., maintenance coats or wax finishes) that can be applied atop the topcoat. Maintenance coats typically will be applied when the initially-applied multilayer floor finish exhibits noticeable wear or loss of gloss, may include sufficient lightness-inducing pigment to restore or to provide a translucent hardened finish having an increased lightness value, and typically will be applied at solids levels that are the same as or somewhat less than the solids levels of the initially-applied topcoat.

If desired, the multilayer floor finishes can also be factory-applied to a variety of flooring substrates. For example, when factory-applied to a multipiece flooring material, the pieces typically will be coated on at least the top surface and optionally coated or partially coated on the side or bottom surfaces.

The invention is further illustrated in the following non-limiting examples, in which all parts and percentages are by weight (wt.) unless otherwise indicated.

### Tile Preparation

Evaluations were performed using both new and used vinyl composition tiles. New tile surfaces were cleaned and roughened until no longer shiny by rubbing with MAGICSCRUB™ mild abrasive cleaner (available from Ecolab Inc.) using a non-woven SCOTCH-BRITE™ green abrasive scrub pad (available from 3M Company). The cleaned new tiles were rinsed with tap water and dried at room temperature. This removed all factory applied coatings and surface soil, and provided a consistently reproducible surface. Used tile surfaces were stripped of residual finish and residue using a 1:8 dilution of the commercial stripper CARESTRIP™ LO (available from Ecolab Inc.). If that was not sufficient to remove the residual finish the tile surfaces were further stripped using a 13% dilution of the stripper shown below in Table 1:

**Table 1**

| **Stripper** | |
|---|---|
| **Ingredient** | **Parts** |
| Benzyl Alcohol⁽¹⁾ | 57.03 |
| Monoethanolamine, 99%⁽²⁾ | 22.81 |
| Diethylene glycol monobutyl ether⁽³⁾ | 5.703 |
| Dipropylene glycol n-butyl ether⁽⁴⁾ | 5.703 |
| Propylene glycol phenyl ether⁽⁵⁾ | 5.703 |
| Surface active agent⁽⁶⁾ | 1.901 |
| Wetting agent⁽⁷⁾ | 0.115 |
| Deionized water | 1.035 |
| TOTAL | 100 |

| | |
|---|---|
| 1. Benzyl alcohol, technical grade, Velsicol Chemical. 2. Monoethanolamine, 99%, Dow Chemical. 3. Diethylene glycol monobutyl ether, 99%, Equistar. 4. Dipropylene glycol n-butyl ether, 98.5%, Dow Chemical. 5. Propylene glycol phenyl ether, Dow Chemical. 6. Linear Alcohol (C12-15) ethoxylate 9 EO, Rhodia. 7. ZONYL™ FSJ, 40% active, E. I. duPont de Nemours and Co.. | |

The stripped used tiles were rinsed with tap water and allowed to dry at room temperature. This provided a cleaned surface like the surface that might be encountered under field conditions.

### Film Evaluation

The coated tiles were evaluated to assess color, transparency, absorbance and visual appearance, as follows:

### Gloss

Film gloss was evaluated at 20° and 60° using a Micro-TRI-Gloss meter (available from Paul N. Gardner Co., Inc.). An average of readings at 4 to 6 discrete points on the coating surface was determined.

### Coating Color Values

Coating color values were evaluated using a MINISCAN™ XE Plus or a COLORQUEST™ XE color spectrophotometer (both available from Hunter Associates Laboratory). The former instrument is a hand-held device that is especially useful for evaluating a coated floor, while the latter instrument is a benchtop device that is especially useful for evaluating individual coated tiles. Both instruments measure the reflectance spectrum of a surface and output color values in L*A*B coordinates. These coordinates can be used to calculate parameters including lightness (L), Whiteness Index (WI), yellow index (YI) and paper brightness (Z%). A D65 illuminant was used at a 10° observer angle. All color values were determined from an average of readings at 6 to 8 discrete points on the coating surface or substrate.

### Hiding Power

Hiding Power was determined by applying one or more layers of a formulation to LENETA™ Form 24B Gray Scale charts (from the Leneta Company) using a No. 10 Bar from the Paul N. Gardner Co. and air drying between layers, to provide coatings having an approximate overall dry coating thickness of about 0.015 mm. The resulting coated films were allowed to air dry for at least 24 hours, then evaluated by having an observer located three meters from the coated gray scale chart record the first gray scale bar that could be clearly differentiated from a white background. Higher observed gray scale bar values corresponded to coatings with greater Hiding Power and a better capability to mask an underlying surface.

### Example 1

A series of acrylic floor finish formulations containing different types and amounts of lightness-inducing agents was prepared. The lightness-inducing agents ACUSOL OP302P organic opacifier (from Rohm and Haas Co., 40% solids), WFD 5006 aqueous TiO₂ dispersion (from Sun Chemical Corp., 73.3% solids) or ROPAQUE ULTRA core-shell polymer emulsion (from Rohm & Haas Co., 30% nonvolatiles) were added to TAJ MAHAL acrylic floor finish (from Ecolab Inc., 20% nonvolatiles). Water was added to each formulation to maintain a constant 20% solids level. The formulations are shown below in Table 1.

**Table 1**

| **Formulation No.** | **Lightness-Inducing Agent** | **Lightness-Inducing Agent (%)** | **Added Water (%)** | **Lightness-Inducing Agent in Coating (%)** |
|---|---|---|---|---|
| 1 | None | 0.0 | 0.0 | 0.0 |
| 1-1 | ACUSOL OP302P | 12.5 | 12.5 | 25.0 |
| 1-2 | ACUSOL OP302P | 7.5 | 7.5 | 15.0 |
| 1-3 | WFD 5006 TiO₂ | 7.6 | 17.9 | 25.0 |
| 1-4 | WFD 5006 TiO₂ | 4.6 | 10.8 | 15.0 |
| 1-5 | ROPAQUE ULTRA | 16.7 | 8.3 | 25.0 |
| 1-6 | ROPAQUE ULTRA | 10.0 | 5.0 | 15.0 |

BYKO™ Charts Form AG-5304 (from BYK-Gardner and similar to LENETA Charts Form 5C) were coated with the above formulations using a No. 10 drawdown bar. One coat of each formulation was applied to each chart. The coatings were allowed to dry for at least 1 day and observed to be translucent. Color readings were taken from the black section of each chart using a COLORQUEST XE color spectrophotometer as described in the section entitled Coating Color Values. The results are shown below in Table 2.

**Table 2**

| **Formulation No.** | **Lightness-Inducing Agent** | **Lightness-Inducing Agent in Coating (%)** | **L*** | **A*** | **b*** |
|---|---|---|---|---|---|
| 10 | None | 0.0 | 27.34 | -0.15 | -0.99 |
| 10-1 | ACUSOL OP302P | 25.0 | 26.86 | 0.03 | -1.09 |
| 10-2 | ACUSOL OP302P | 15.0 | 27.44 | -0.07 | -1.17 |
| 10-3 | WFD 5006 TiO₂ | 25.0 | 48.47 | -1.18 | -6.38 |
| 10-4 | WFD 5006 TiO₂ | 15.0 | 42.61 | -1.00 | -5.89 |
| 10-5 | ROPAQUE Ultra | 25.0 | 54.76 | -1.07 | -3.12 |
| 10-6 | ROPAQUE Ultra | 15.0 | 44.95 | -0.80 | -2.35 |

The results in Table 2 show that at similar loading levels, ROPAQUE ULTRA opacifier has a much greater effect on the L* value of a floor finish coated over a black substrate than does ACUSOL OP302P opacifier or WFD 5006 TiO₂ pigment. Addition of ROPAQUE ULTRA opacifier provided a coating having a lighter, "whiter" appearance than the control coating or the coatings containing ACUSOL OP302P opacifier or WFD 5006 TiO₂ pigment. ROPAQUE ULTRA opacifier also appeared to be a more potent lightness-inducing agent than TiO₂ added at the same weight percent.

### Example 2

The Example 1 formulations were evaluated to determine their resistance to sedimentation and long-term storage. A measured amount of each formulation was transferred to a 50 mL centrifuge tube (from VWR International, catalog no. 21008-240). The samples were centrifuged at 1500 rpm for 10 minutes. Immediately after centrifuging, several milliliters of finish were drawn from the top of each tube and coated using a No. 10 drawdown bar onto a BYKO Charts Form AG-5304 as employed in Example 1. The remaining finish was decanted from the centrifuge tube and the sediment (if any) remaining in the bottom of the centrifuge tube was dried in a 50° C oven for at least one day. Once dry, the sediment was removed from the oven, cooled to room temperature and weighed.

In order to rate the stability of the different formulas, a percentage of lightness-inducing agent lost upon centrifugation was determined by dividing the amount of residue remaining after centrifugation and drying by the total grams of lightening agent in the floor finish, and multiplying by 100. Table 3 lists the centrifuge results for the Example 1 formulations.

**Table 3**

| **Form. No.** | **Lightness-Inducing Agent** | **Lightness-Inducing Agent in Coating (%)** | **Mass of Floor Finish in Centrifuge Tube (g)** | **Mass of Residue After Centrifuging, Decanting and Drying (g)** | **% Agent Lost** |
|---|---|---|---|---|---|
| 1 | None | 0.0 | 45.2698 | 0.1055 | NA |
| 1-1 | ACUSOL OP302P | 25.0 | 45.7868 | 0.0863 | 3.77 |
| 1-2 | ACUSOL OP302P | 15.0 | 45.7958 | 0.0996 | 7.25 |
| 1-3 | WFD 5006 TiO₂ | 25.0 | 47.1096 | 0.8229 | 34.94 |
| 1-4 | WFD 5006 TiO₂ | 15.0 | 47.9867 | 0.5842 | 40.58 |
| 1-5 | ROPAQUE ULTRA | 25.0 | 45.7780 | 0.1233 | 5.39 |
| 1-6 | ROPAQUE ULTRA | 15.0 | 43.8113 | 0.1061 | 8.07 |

The results in Table 3 show that less lightness-inducing agent was lost due to sedimentation in the formulations containing ROPAQUE ULTRA or ACUSOL OP302P opacifiers than in the formulation containing WFD 5006 TiO₂ pigment. These polymeric lightness-inducing agent formulations should thus have better storage stability than the formulation containing WFD 5006 TiO₂ pigment.

The black areas of the coated BYKO charts were evaluated to determine their color values using a COLORQUEST XE color spectrophotometer as described above in the section entitled Coating Color Values. The change in L* value due to sedimentation (Delta L*) was calculated by subtracting the measured L* value after centrifuging from the initial L* value for each formulation. The results are shown below in Table 4.

**Table 4**

| **Form. No.** | **Lightness-Inducing Agent** | **Lightness-Inducing Agent in Coating (%)** | **L*** | **a*** | **b*** | **Delta L*** |
|---|---|---|---|---|---|---|
| 1 | None | 0.0 | 27.27 | -0.17 | -1.00 | 0.07 |
| 1-1 | ACUSOL OP302P | 25.0 | 27.31 | 0.22 | -1.16 | -0.45 |
| 1-2 | ACUSOL OP302P | 15.0 | 27.35 | -0.02 | -1.19 | 0.09 |
| 1-3 | WFD 5006 TiO₂ | 25.0 | 41.35 | -0.95 | -6.63 | 7.12 |
| 1-4 | WFD 5006 TiO₂ | 15.0 | 37.83 | -0.75 | -5.96 | 4.78 |
| 1-5 | ROPAQUE ULTRA | 25.0 | 54.92 | -1.07 | -3.08 | -0.16 |
| 1-6 | ROPAQUE ULTRA | 15.0 | 45.08 | -0.80 | -2.44 | -0.13 |

The results in Table 4 show that the formulations containing ROPAQUE ULTRA opacifier retained their lightness-inducing properties after centrifugation (as manifested by little or no change in the L* value on the black section of the BYKO chart). The results also show that the formulations containing WFD 5006 TiO₂ pigment had a higher delta L* and some loss of lightness-inducing properties. The formulations containing ACUSOL OP302P opacifier also retained their lightness-inducing properties after centrifugation but at lower L* values at the loading levels employed.

### Example 3

A series of floor finish formulations was prepared using the ingredients set out below in Table 5 and applied in 1 to 4 coats at a 20% solids level to clean floor tiles. Tiles coated with 3 or 4 coats of finish were overcoated with an unmodified zinc-crosslinked polyacrylate floor finish containing 25% solids. The coated tiles were evaluated alongside tiles coated with similar coating weights of a modified floor finish made by adding 4 % UCD-1106E titanium dioxide pigment (from Rohm and Haas Co.) as a lightness-inducing agent in TAJ MAHAL finish. The applied finishes exhibited very good to excellent leveling, very good to excellent water resistance (after 1 and 24 hour exposure to standing water), good to very good removability, good to very good black heel mark resistance, and slip resistance coefficients of about 0.6 to about 0.7 (measured without the overcoat). The highest gloss levels were observed for finishes prepared using 3 to 4 finish coats containing lightness-inducing agent(s) and the unmodified polyacrylate overcoat.

**Table 5**

| | **Formulation No.** | | | |
|---|---|---|---|---|
| **Ingredient** | **3-1** | **3-2** | **3-3** | **3-4** |
| Water | 50.57 | 47.24 | 46.11 | 42.88 |
| Zinc-free styrene acrylic emulsion^{A} | 33.23 | 33.26 | 30.19 | 31.51 |
| UCD-1106E Titanium Dioxide^{B} | 5.70 | 2.80 | 1.60 | 0.00 |
| Diethylene glycol ethyl ether | 3.48 | 3.48 | 3.48 | 3.30 |
| EPOLENE™ E-43N wax^{C} | 2.36 | 2.36 | 2.36 | 2.36 |
| Tributoxy ethyl phosphate | 1.31 | 1.31 | 1.31 | 1.20 |
| MASURF™ FS-230 surfactant^{D} | 0.87 | 0.87 | 0.87 | 0.87 |
| A-C™ 325N wax emulsion^{E} | 0.86 | 0.86 | 0.86 | 0.86 |
| TEXANOL™ ester alcohol^{F} | 0.50 | 0.50 | 0.50 | 0.50 |
| ACUSOL™ 460N copolymer^{G} | 0.40 | 0.40 | 0.30 | 0.10 |
| ABEX™ 18S emulsifier^{H} | 0.37 | 0.37 | 0.37 | 0.37 |
| ACRYSOL™ 2020NPR rheology modifier^{I} | 0.30 | 0.00 | 0.00 | 0.00 |
| KATHON^{TM} CG/ICP preservative ^{J} | 0.03 | 0.03 | 0.03 | 0.03 |
| SE-21 antifoam emulsion^{K} | 0.02 | 0.02 | 0.02 | 0.02 |
| ROPAQUE™ ULTRA opacifier^{L} | 0.00 | 6.50 | 12.00 | 16.00 |
| Total | 100.00 | 100.00 | 100.00 | 100.00 |

| | | | | |
|---|---|---|---|---|
| A. From Rohm and Haas Co., made as described in U.S. Patent Nos. 5,574,090 and 6,586,516 (40.5% solids). B. From Rohm and Haas Co. C. Chemically modified polypropylene from Eastman Chemical Co. D. Fluoroaliphatic amine oxide fluorosurfactant, from Mason Chemical Co. (1% active solution). E. From ChemCor. (35% solids). F. From Eastman Chemical Co. G. Hydrophobically modified maleic/olefin copolymer, from Rohm and Haas Co. H. From Rhone-Poulenc, Inc. Surfactants & Specialty Chemicals. I. Nonionic solvent-free hydrophobically modified ethylene oxide urethane (HEUR) rheology modifier, from Rohm and Haas Co. J. From Rohm and Haas Co. K. From Wacker Silicones. L. From Rohm and Haas Co., 30% solids. | | | | |

## Claims

1. A floor coating method comprising applying to a flooring substrate a jobsite-renewable floor finish that can be removed from an underlying flooring substrate without removing substantial portions of the flooring substrate using simple, minimally abrasive measures, mildly abrasive but flooring-safe measures, or other measures and without requiring aggressive removal techniques, and then replaced with the same or substantially similar finish and hardened to provide a visibly smooth tack-free film, comprising a film former and a lightness-inducing agent from about 1 to about 75 wt. % based on a comparison of the lightness-inducing agent solids weight to the total floor finish solids comprising a core-shell polymer system or sheathed polymer system to provide a translucent hardened finish layer.

2. The method according to claim 1 wherein the lightness-inducing agent has a submicron average particle diameter and will diffusely reflect light.

3. The method according to claim 1 wherein the lightness-inducing agent comprises organic particles.

4. The method according to claim 1 wherein the lightness-inducing agent has one visual form when dissolved or suspended in the film former and another visual form when the film former is hardened.

5. The method according to claim 1 wherein the lightness-inducing agent contains or is capable of forming internal microvoids when the film former is hardened.

6. The method according to claim 1 wherein the lightness-inducing agent comprises sequentially emulsion polymerized dispersed particles of heteropolymers in which a polymeric acid core is at least partially encased in a polymeric shell or sheath that is permeable to a volatile base adapted to cause swelling of the core by neutralization.

7. The method according to claim 1 wherein the lightness-inducing agent is resistant to sedimentation or other settling when the film former is stored.

8. The method according to claim 1 further comprising submicron inorganic particles.

9. The method according to claim 8 wherein the submicron inorganic particles comprise zinc oxide, lithopone, titanium dioxide, zinc sulfide, antimony oxide, zirconium oxide, barium sulfate, coprecipitated 3BaS04/Al(OH)3, bismuth oxychloride or mixture thereof.

10. The method according to claim 8 wherein the submicron inorganic particles comprise about 1 to about 30 wt. % titanium dioxide particles based on the total floor finish solids.

11. The method according to claim 1 wherein the film former is water- soluble or water-dispersible.

12. The method according to claim 1 wherein the film former comprises a water-soluble or water-dispersible acid-containing polymer crosslinked using a transition metal, alkaline earth metal, alkali metal or mixture thereof.

13. The method according to claim 12 wherein the transition metal comprises zinc and the polymer is acrylic.

14. The method according to claim 1 wherein the film former comprises a water-soluble or water-dispersible metal-free polymer

15. The method according to claim 1 wherein the film former comprises a radiation-curable polyurethane, polyurethane dispersion, multipart polyurethane or latent one part polyurethane composition containing a blocked isocyanate.

16. The method according to claim 1 that when coated at a 50 m2/liter coating rate atop a white substrate and evaluated using the L*a*b color space has a lightness value L* greater than that obtained in the absence of the lightness-inducing agent and less than about 60.

17. The method according to claim 16 wherein the coated mixture when hardened will impart to patterned floor tiles a cleaner appearance but will permit the pattern to be clearly discerned under normal daytime illumination by an observer standing on the floor tiles.

18. The method according to claim 16 wherein the lightness value L* is less than about 55.

19. The method according to claim 16 wherein the ratio calculated by dividing the lightness value L* by the Hiding Power is above about 30, with Hiding Power being determined using a Form 24B Gray Scale chart coated with a 0.015 mm thick layer of hardened finish and measuring the first gray scale bar that can be clearly differentiated from a white background by an observer located three meters from the coated gray scale chart.

20. The method according to claim 19 wherein the ratio is above about 35.

21. The method according to claim 1 that when coated at a 50 m2/liter coating rate atop a white substrate and evaluated using the L*a*b color space has a ratio calculated by dividing the Whiteness Index by the 500 nm absorbance coefficient that is above about 40.

22. The method according to claim 21 wherein the ratio is above about 80.

23. The method according to claim 1 containing about 1 to about 50 wt. % lightness-inducing agent based on the total floor finish solids.

24. The method according to claim 1 containing about 1 to about 30 wt. % lightness-inducing agent based on the total floor finish solids.

25. The method according to claim 1 wherein the substrate comprises vinyl sheet flooring, linoleum, rubber sheeting, vinyl composite tiles, rubber tiles, cork or a synthetic sports floor.

26. The method according to claim 1 wherein the substrate comprises concrete, stone, marble, wood, ceramic tile, grout, Terrazzo or a dry shake floor.

27. The method according to claim 1 comprising applying to the substrate a multilayer finish comprising at least one layer of an undercoat and at least one layer of a topcoat having different compositions.

28. The method according to claim 27 wherein at least one layer of the undercoat comprises the lightness-inducing agent.

29. A method for maintaining a floor comprising applying and hardening one or more maintenance coats atop a floor finish that exhibits noticeable wear or loss of gloss, wherein at least one of the maintenance coats comprises a floor finish applied according to claims 1 to 24.

30. A jobsite-renewable floor finish kit comprising a floor finish according to claims 1 to 24 in a suitable container or dispenser and instructions for application of the floor finish.

31. A kit according to claim 30 comprising an undercoat and topcoat having different compositions.

32. A kit according to claim 31 wherein at least the undercoat comprises the lightness-inducing agent.

33. A kit according to claim 30 further comprising a maintenance coating comprising a floor finish according to claims 1 to 24 to restore or to provide a translucent hardened floor finish having an increased lightness value.

## Patentansprüche

1. Verfahren zur Fußbodenbeschichtung, umfassend das Auftragen eines erneuerbaren Fußbodenlacks, welcher von einem darunter liegenden Fußbodensubstrat entfernt werden kann, ohne wesentliche Anteile des Fußbodensubstrats zu entfernen, unter Anwendung einfacher, minimal abrasiver Maßnahmen, schwach abrasiver, jedoch den Fußboden schonender Maßnahmen oder anderer Maßnahmen und ohne die Erfordernis aggressiver Entfernungstechniken, und anschließend ersetzt durch den gleichen oder im Wesentlichen ähnlichen Fußbodenlack und gehärtet, um einen sichtbar glatten, klebfreien Film bereitzustellen, umfassend einen Filmbildner und ein eine Aufhellung bewirkendes Mittel mit etwa 1 bis etwa 75 Gew.-%, basierend auf einem Vergleich des Feststoffgewichts des Aufhellung bewirkenden Mittels zu den gesamten Fußbodenpflegemittel-Feststoffen, umfassend ein Kern-Schale-Polymersystem oder ummanteltes Polymersystem, um eine Schicht aus durchscheinendem, gehärtetem Fußbodenlack bereitzustellen.

2. Verfahren nach Anspruch 1, wobei das eine Aufhellung bewirkende Mittel einen durchschnittlichen Partikeldurchmesser im Submikron-Bereich aufweist und Licht diffus reflektiert.

3. Verfahren nach Anspruch 1, wobei das eine Aufhellung bewirkende Mittel organische Partikel umfasst.

4. Verfahren nach Anspruch 1, wobei das eine Aufhellung bewirkende Mittel eine sichtbare Form besitzt, wenn es im Filmbildner gelöst oder suspendiert ist, und eine andere sichtbare Form besitzt, wenn der Filmbildner ausgehärtet ist.

5. Verfahren nach Anspruch 1, wobei das Aufhellung bewirkende Mittel Mikroporen enthält oder in der Lage ist, diese zu bilden, wenn der Filmbildner ausgehärtet ist.

6. Verfahren nach Anspruch 1, wobei das eine Aufhellung bewirkende Mittel sequenziell emulsionspolymerisierte, dispergierte Partikel von Heteropolymeren umfasst, bei welchen ein Kern aus polymerer Säure wenigstens teilweise umhüllt ist von einer polymeren Schale oder Hülle, welche durchlässig ist für eine flüchtige Base, angepasst, ein Anschwellen des Kerns durch Neutralisation zu bewirken.

7. Verfahren nach Anspruch 1, wobei das eine Aufhellung bewirkende Mittel beständig ist gegenüber Sedimentation oder ein anderes Absetzen, wenn der Filmbildner gelagert wird.

8. Verfahren nach Anspruch 1, ferner umfassend anorganische Submikron-Partikel.

9. Verfahren nach Anspruch 8, wobei die anorganischen Submikron-Partikel umfassen: Zinkoxid, Lithopone, Titandioxid, Zinksulfid, Antimonoxid, Zirconiumoxid, Bariumsulfat, kopräzipitiertes 3 BaSO₄/Al(OH)₃, Bismutchloridoxid oder ein Gemisch davon.

10. Verfahren nach Anspruch 8, wobei die anorganischen Submikron-Partikel etwa 1 bis etwa 30 Gew.-% an Titandioxid-Partikeln umfassen, basierend auf den gesamten Feststoffen des Fußbodenlacks.

11. Verfahren nach Anspruch 1, wobei der Filmbildner wasserlöslich oder in Wasser dispergierbar ist.

12. Verfahren nach Anspruch 1, wobei der Filmbildner ein wasserlösliches oder in Wasser dispergierbares, säurehaltiges Polymer umfasst, quervernetzt unter Verwendung eines Übergangsmetalls, Erdalkalimetalls, Alkalimetalls oder eines Gemisches davon.

13. Verfahren nach Anspruch 12, wobei das Übergangsmetall Zink umfasst und das Polymer acrylisch ist.

14. Verfahren nach Anspruch 1, wobei der Filmbildner ein wasserlösliches oder in Wasser dispergierbares, metallfreies Polymer umfasst.

15. Verfahren nach Anspruch 1, wobei der Filmbildner ein durch Strahlung härtbares Polyurethan, eine Polyurethan-Dispersion, eine Mehrkomponenten-Polyurethan- oder eine latente Einkomponenten-Polyurethanzusammensetzung, enthaltend ein blockiertes Isocyanat, umfasst.

16. Verfahren nach Anspruch 1, das, wenn beschichtet mit einer Beschichtungsrate von 50 m²/Liter auf einem weißen Substrat und bewertet unter Verwendung das L*a*b-Farbraums, einen Helligkeitswert L* aufweist, der größer ist als jener, welcher erhalten wurde in Abwesenheit des eine Aufhellung bewirkenden Mittels, und kleiner ist als etwa 60.

17. Verfahren nach Anspruch 16, wobei das aufgetragene Gemisch, wenn ausgehärtet, gemusterten Bodenfliesen eine sauberere Erscheinung verleiht, es dem Muster jedoch erlaubt, unter normalem Tageslicht auf deutliche Weise wahrgenommen zu werden durch einen Beobachter, welcher auf den Bodenfliesen steht.

18. Verfahren nach Anspruch 16, wobei der Helligkeitswert L* kleiner ist als etwa 55.

19. Verfahren nach Anspruch 16, wobei das Verhältnis, berechnet durch Dividieren des Helligkeitswertes L* durch die Deckkraft, oberhalb von etwa 30 liegt, wobei die Deckkraft bestimmt wird durch Verwendung einer Formular-24b-Graustufenkarte, beschichtet mit einer 0,015 mm dicken Schicht aus gehärtetem Lack und Messen des ersten Graustufenbalkens, welcher klar unterschieden werden kann von einem weißen Hintergrund durch einen Beobachter, der drei Meter von der beschichteten Graustufenkarte entfernt ist.

20. Verfahren nach Anspruch 19, wobei das Verhältnis oberhalb von 35 liegt.

21. Verfahren nach Anspruch 1, das, wenn beschichtet mit einer Beschichtungsrate von 50 m²/Liter auf einem weißen Substrat und bewertet unter Verwendung des L*a*b-Farbraums, ein Verhältnis aufweist, berechnet durch Dividieren des Weißegrad-Index durch den 500-nm-Absoptionskoeffizienten, welches oberhalb von etwa 40 liegt.

22. Verfahren nach Anspruch 21, wobei das Verhältnis oberhalb von etwa 80 liegt.

23. Verfahren nach Anspruch 1, enthaltend etwa 1 bis etwa 50 Gew.-% an Aufhellung bewirkendem Mittel, basierend auf den Gesamtfeststoffen des Fußbodenlacks.

24. Verfahren nach Anspruch 1, enthaltend etwa 1 bis etwa 30 Gew.-% an Aufhellung bewirkendem Mittel, basierend auf den gesamten Feststoffen des Fußbodenlacks.

25. Verfahren nach Anspruch 1, wobei das Substrat umfasst: Fußbodenbelag aus Vinylplatten, Linoleum, Kautschukbahnen, Vinyl-Verbundstofffliesen, Kautschukfliesen, Kork oder einen synthetischen Sport-Fußboden.

26. Verfahren nach Anspruch 1, wobei das Substrat umfasst: Beton, Stein, Marmor, Holz, Keramikfliesen, feiner Bruchstein, Terrazzo oder einen Einstreu-Fußboden.

27. Verfahren nach Anspruch 1, umfassend das Auftragen auf das Substrat eines Mehrschicht-Lacks, umfassend wenigstens eine Schicht einer Grundierung und wenigstens eine Schicht eines Decklacks mit unterschiedlichen Zusammensetzungen.

28. Verfahren nach Anspruch 27, wobei wenigstens eine Schicht der Grundierung das Aufhellung bewirkende Mittel umfasst.

29. Verfahren zur Pflege eines Fußbodens, umfassend das Auftragen und Härten einer oder mehrerer Pflegebeschichtungen auf einem Fußbodenlack, welcher eine merkliche Abnutzung oder einen Verlust von Glanz zeigt, wobei wenigstens eine der Pflegebeschichtungen einen Fußbodenlack umfasst, aufgetragen gemäß den Ansprüchen 1 bis 24.

30. Ausstattungssatz zur Fußbodenlack-Erneuerung nach den Ansprüchen 1 bis 24 in einem geeigneten Behälter oder Spender sowie Anweisungen für die Anwendung des Fußbodenlacks.

31. Ausstattungssatz nach Anspruch 30, umfassend eine Grundierung und einen Decklack mit unterschiedlichen Zusammensetzungen.

32. Ausstattungssatz nach Anspruch 31, wobei wenigstens die Grundierung das Aufhellung bewirkende Mittel umfasst.

33. Ausstattungssatz nach Anspruch 30, ferner umfassend eine Pflegebeschichtung, umfassend einen Fußbodenlack nach den Ansprüchen 1 bis 24, um einen durchscheinenden, gehärteten Fußbodenlack bereitzustellen, aufweisend einen erhöhten Helligkeitswert.

## Revendications

1. Procédé de revêtement d'un sol comprenant l'application sur un substrat de revêtement de sol d'une finition de sol renouvelable sur le site de travail qui peut être retirée d'un substrat de revêtement de sol sous-jacent sans retirer des parties importantes du substrat de revêtement de sol en utilisant des mesures simples très peu abrasives, des mesures légèrement abrasives mais sans risque pour le revêtement de sol, ou d'autres mesures et sans avoir besoin de techniques agressives de retrait, et ensuite remplacée par une finition identique ou sensiblement similaire et durcie pour fournir un film sec au toucher visiblement lisse, comprenant un produit filmogène et un agent induisant une clarté à raison d'environ 1 à environ 75 % en poids sur la base d'une comparaison du poids des solides de l'agent induisant une clarté aux solides totaux de la finition de sol comprenant un système de polymère noyau-coque ou un système de polymère gainé pour fournir une couche de finition durcie translucide.

2. Procédé selon la revendication 1, dans lequel l'agent induisant une clarté présente un diamètre particulaire moyen sous-micronique et réfléchira la lumière de façon diffuse.

3. Procédé selon la revendication 1, dans lequel l'agent induisant une clarté comprend des particules organiques.

4. Procédé selon la revendication 1, dans lequel l'agent induisant une clarté a une forme visuelle quand il est dissous ou mis en suspension dans le produit filmogène et une autre forme visuelle quand le produit filmogène est durci.

5. Procédé selon la revendication 1, dans lequel l'agent induisant une clarté contient ou est capable de former des micro-vides internes quand le produit filmogène est durci.

6. Procédé selon la revendication 1, dans lequel l'agent induisant une clarté comprend des particules d'hétéropolymères dispersées séquentiellement polymérisées en émulsion dans lesquelles un noyau d'acide polymère est au moins partiellement enfermé dans une coque ou gaine polymère qui est perméable à une base volatile capable de faire gonfler le noyau par neutralisation.

7. Procédé selon la revendication 1, dans lequel l'agent induisant une clarté est résistant à la sédimentation ou à un autre dépôt quand le produit filmogène est stocké.

8. Procédé selon la revendication 1, comprenant en outre des particules inorganiques sous-microniques.

9. Procédé selon la revendication 8, dans lequel les particules inorganiques sous-microniques comprennent de l'oxyde de zinc, du lithopone, du dioxyde de titane, du sulfure de zinc, de l'oxyde d'antimoine, de l'oxyde de zirconium, du sulfate de baryum, du 3BaSO4/Al(OH)3 coprécipité, de l'oxychlorure de bismuth ou un mélange de ceux-ci.

10. Procédé selon la revendication 8, dans lequel les particules inorganiques sous-microniques comprennent environ 1 à environ 30 % en poids de particules de dioxyde de titane sur la base des solides totaux de la finition de sol.

11. Procédé selon la revendication 1, dans lequel le produit filmogène est soluble dans l'eau ou dispersible dans l'eau.

12. Procédé selon la revendication 1, dans lequel le produit filmogène comprend un polymère contenant un acide soluble dans l'eau ou dispersible dans l'eau réticulé en utilisant un métal de transition, un métal alcalino-terreux, un métal alcalin ou un mélange de ceux-ci.

13. Procédé selon la revendication 12, dans lequel le métal de transition comprend du zinc et le polymère est acrylique.

14. Procédé selon la revendication 1, dans lequel le produit filmogène comprend un polymère exempt de métal soluble dans l'eau ou dispersible dans l'eau.

15. Procédé selon la revendication 1, dans lequel le produit filmogène comprend un polyuréthane durcissable sous l'effet d'un rayonnement, une dispersion de polyuréthane, un polyuréthane à plusieurs parties ou une composition de polyuréthane latente à une partie contenant un isocyanate bloqué.

16. Procédé selon la revendication 1, qui quand il est revêtu à un taux de revêtement de 50 m2/litre au-dessus d'un substrat blanc et évalué en utilisant l'espace colorimétrique L*a*b présente une valeur de clarté L* supérieure à celle obtenue en l'absence de l'agent induisant une clarté et inférieure à environ 60.

17. Procédé selon la revendication 16, dans lequel le mélange revêtu quand il est durci conférera à des carreaux de sol à motif une apparence plus propre mais permettra au motif d'être clairement discerné sous un éclairage diurne normal par un observateur se trouvant sur les carreaux de sol.

18. Procédé selon la revendication 16, dans lequel la valeur de clarté L* est inférieure à environ 55.

19. Procédé selon la revendication 16, dans lequel le rapport calculé en divisant la valeur de clarté L* par le pouvoir masquant est supérieur à environ 30, le pouvoir masquant étant déterminé en utilisant un tableau d'échelle de gris forme 24B revêtu avec une couche de finition durcie d'une épaisseur de 0,015 mm et en mesurant la première barre d'échelle de gris qui peut être clairement différenciée d'un arrière-plan blanc par un observateur situé à 3 mètres du tableau d'échelle de gris revêtu.

20. Procédé selon la revendication 19, dans lequel le rapport est supérieur à environ 35.

21. Procédé selon la revendication 1, qui quand il est revêtu à un taux de revêtement de 50 m2/litre au-dessus d'un substrat blanc et évalué en utilisant l'espace colorimétrique L*a*b présente un rapport calculé en divisant l'indice de blancheur par le coefficient d'absorbance à 500 nm qui est supérieur à environ 40.

22. Procédé selon la revendication 21, dans lequel le rapport est supérieur à environ 80.

23. Procédé selon la revendication 1, contenant environ 1 à environ 50 % en poids d'un agent induisant une clarté sur la base des solides totaux de la finition de sol.

24. Procédé selon la revendication 1, contenant environ 1 à environ 30 % en poids d'un agent induisant une clarté sur la base des solides totaux de la finition de sol.

25. Procédé selon la revendication 1, dans lequel le substrat comprend un revêtement de sol en vinyle de type feuille, un linoléum, une feuille de caoutchouc, des carreaux composites en vinyle, des carreaux de caoutchouc, du liège ou un sol synthétique pour le sport.

26. Procédé selon la revendication 1, dans lequel le substrat comprend du béton, de la pierre, du marbre, du bois, un carreau de céramique, un coulis de ciment, un terrazzo ou un sol saupoudré à sec.

27. Procédé selon la revendication 1, comprenant l'application sur le substrat d'une finition multicouche comprenant au moins une couche de sous-couche et au moins une couche de revêtement supérieur ayant différentes compositions.

28. Procédé selon la revendication 27, dans lequel au moins une couche de la sous-couche comprend l'agent induisant une clarté.

29. Procédé d'entretien d'un sol comprenant l'application et le durcissement d'un ou de plusieurs revêtements d'entretien au-dessus d'une finition de sol qui présente une usure ou une perte de brillant visible, dans lequel au moins un des revêtements d'entretien comprend une finition de sol appliquée selon les revendications 1 à 24.

30. Kit de finition de sol renouvelable sur le site de travail comprenant une finition de sol selon les revendications 1 à 24 dans un récipient ou distributeur approprié et des instructions pour l'application de la finition de sol.

31. Kit selon la revendication 30 comprenant une sous-couche et un revêtement supérieur ayant différentes compositions.

32. Kit selon la revendication 31, dans lequel au moins la sous-couche comprend l'agent induisant une clarté.

33. Kit selon la revendication 30, comprenant en outre un revêtement d'entretien comprenant une finition de sol selon les revendications 1 à 24 pour restaurer ou fournir une finition de sol durcie translucide présentant une valeur de clarté accrue.
